# EUROPÄISCHE PATENTSCHRIFT

(11) **EP 2 097 296 B1**
(45) Veröffentlichungstag und Bekanntmachung des Hinweises auf die Patenterteilung: **05.04.2017**
(21) Anmeldenummer: 06818926.5
(22) Anmeldetag: 30.11.2006
(51) Int. Cl.: B60R 16/03, H02J 1/14

(54) **VERFAHREN FÜR EIN BORDNETZ EINES KRAFTFAHRZEUGS MIT VORAUSSCHAUENDER TEMPORÄRER ENTLASTUNG DES BORDNETZES**
METHOD FOR A MOTOR VEHICLE WITH A PRE-EMPTIVE TEMPORARY LOAD REDUCTION OF THE VEHICLE ELECTRIC SYSTEM
PROCÉDÉ POUR UN VÉHICULE À MOTEUR DE RÉDUCTION DE CHARGE TEMPORAIRE ANTICIPÉE DU RÉSEAU DE BORD

(43) Veröffentlichungstag der Anmeldung: 09.09.2009
(73) Patentinhaber: Bayerische Motoren Werke Aktiengesellschaft, 80809 München (DE)
(72) Erfinder: LEMKE, Olaf, 80995 München (DE); HAUSCHILD, Martin, 81249 München (DE)
(74) Vertreter: Grüter, Klaus Peter
(86) Internationale Anmeldenummer: PCT/EP2006/011485
(87) Internationale Veröffentlichungsnummer: WO 2008/064702

(56) Entgegenhaltungen:
- DE-A1- 3 715 423
- DE-A1- 10 216 184
- DE-A1- 19 931 144
- DE-A1-102004 003 019
- DE-A1-102005 013 440

## Beschreibung

Die Erfindung betrifft insbesondere ein Verfahren zur Reduzierung des Energieverbrauchs eines Kraftfahrzeugs mit mindestens einem elektrischen Bordnetz an das mindestens ein erster elektrischer Verbraucher angeschlossen ist.

Die Anzahl der elektrischen Verbraucher in Kraftfahrzeugen hat erheblich zugenommen. Um den CO₂ - Ausstoß im Fahrzeug zu reduzieren, werden hydraulisch arbeitende Verbraucher durch elektrische Verbraucher ersetzt. So ersetzt ggf. beispielsweise eine elektrische Lenkung (EPS) eine hydraulische Lenkung des Kraftfahrzeugs. Solche elektrischen Verbraucher können jedoch kurzzeitig eine hohe Leistungsanforderung an das Fahrzeugbordnetz stellen. Daraus resultiert auch eine hohe Anforderung an die Bordnetzstabilität des Kraftfahrzeugs. Insbesondere muss bei kurzzeitig auftretenden hohen Belastungen eine ausreichend hohe elektrische Spannung bzw. elektrische Leistung zur Verfügung stehen.

Die DE 199 31 144 A1 betrifft ein Verfahren zum Betreiben eines elektrischen Fahrzeug-Bordnetzes mit einem durch eine Antriebsmaschine des Fahrzeugs antreibbaren Generator zum Laden einer Batterie und zum Speisen von elektrischen Verbrauchern. Um umfassend auf verschiedene Bordnetzzustände reagieren zu können, wird vorgeschlagen, dass vor Aktivierung von Hochstrom-Verbrauchern, wie insbesondere ein ABS oder eine Servolenkpumpe, elektrische Verbraucher mit geringer Priorität abgeschaltet werden.

Aufgabe der Erfindung ist es, ein Verfahren anzugeben, dass die Realisierung eines leistungsfähigen Bordnetzes und zudem die Reduzierung des Energieverbrauchs eines Kraftfahrzeugs ermöglicht.

Diese Aufgabe wird durch ein Verfahren bzw. ein Bordnetz mit den Merkmalen des betreffenden unabhängigen Anspruchs gelöst. Vorteilhafte Ausgestaltungen der Erfindung sind Gegenstand der abhängigen Patentansprüche.

Ein wesentlicher Aspekt der Erfindung besteht darin, dass sich das Niveau der elektrischen Last des elektrischen Bordnetzes ohne den mindestens ersten Verbraucher in einem ersten Betriebszustand des Kraftfahrzeugs auf einem ersten höheren Niveau befindet. Beispielsweise versorgen der elektrische Generator des Fahrzeugs und die Batterie des Fahrzeugs das Bordnetz gemeinsam, um die höhere elektrische Last bzw. die elektrischen Verbraucher mit einer ausreichenden elektrischen Spannung zu versorgen. Der Generator kann in dieser Situation beispielsweise weitgehend voll ausgelastet sein.

In einem zweiten Betriebszustand wird das Niveau der elektrischen Last des elektrischen Bordnetzes ohne den mindestens ersten Verbraucher in einem zweiten Betriebszustand des Kraftfahrzeugs temporär auf ein zweites ggü. dem ersten Niveau niedrigeres Niveau gebracht. Der erste Verbraucher bzw. die durch ihn hervorgerufene Last am Bordnetz sei hierbei ausgeklammert.

Eine im Fahrzeug vorgesehene Fahrsituations-Erfassungseinrichtung erkennt eine weitgehend unmittelbar bevorstehende besondere Fahrsituation aufgrund des bisherigen Verhaltens des Fahrers beim Steuern des Fahrzeugs und/oder des Fahrzeugs im Voraus und veranlasst, dass das Niveau der elektrischen Last des elektrischen Bordnetzes temporär auf das zweite niedrigere Niveau gebracht wird.

In diesem zweiten Betriebszustand werden insbesondere "leistungshungrige" und für den Fahrbetrieb aktuell tatsächlich erforderliche Verbraucher mit einer ausreichend hohen elektrischen Spannung und/oder elektrischen Leistung aus dem Bordnetz versorgt. Diese Verbraucher reagieren dann in der erwarteten, insbesondere komfortablen Weise. Wird beispielsweise eine elektrische Lenkung bei einem Wendemanöver bzw. bei einem Wendevorgang während des ersten höheren Lastniveaus betätigt, kann es vorkommen, dass die Spannung im Bordnetz durch die zusätzliche
Ein wesentlicher Aspekt der Erfindung besteht darin, dass sich das Niveau der elektrischen Last des elektrischen Bordnetzes ohne den mindestens ersten Verbraucher in einem ersten Betriebszustand des Kraftfahrzeugs auf einem ersten höheren Niveau befindet. Beispielsweise versorgen der elektrische Generator des Fahrzeugs und die Batterie des Fahrzeugs das Bordnetz gemeinsam, um die höhere elektrische Last bzw. die elektrischen Verbraucher mit einer ausreichenden elektrischen Spannung zu versorgen. Der Generator kann in dieser Situation beispielsweise weitgehend voll ausgelastet sein.

In einem zweiten Betriebszustand wird das Niveau der elektrischen Last des elektrischen Bordnetzes ohne den mindestens ersten Verbraucher in einem zweiten Betriebszustand des Kraftfahrzeugs temporär auf ein zweites ggü. dem ersten Niveau niedrigeres Niveau gebracht. Der erste Verbraucher bzw. die durch ihn hervorgerufene Last am Bordnetz sei hierbei ausgeklammert.

Eine im Fahrzeug vorgesehene Fahrsituations-Erfassungseinrichtung erkennt eine weitgehend unmittelbar bevorstehende besondere Fahrsituation aufgrund des bisherigen Verhaltens des Fahrers beim Steuern des Fahrzeugs und/oder des Fahrzeugs im Voraus und veranlasst, dass das Niveau der elektrischen Last des elektrischen Bordnetzes temporär auf das zweite niedrigere Niveau gebracht wird.

In diesem zweiten Betriebszustand werden insbesondere "leistungshungrige" und für den Fahrbetrieb aktuell tatsächlich erforderliche Verbraucher mit einer ausreichend hohen elektrischen Spannung und/oder elektrischen Leistung aus dem Bordnetz versorgt. Diese Verbraucher reagieren dann in der erwarteten, insbesondere komfortablen Weise. Wird beispielsweise eine elektrische Lenkung bei einem Wendemanöver bzw. bei einem Wendevorgang während des ersten höheren Lastniveaus betätigt, kann es vorkommen, dass die Spannung im Bordnetz durch die zusätzliche Belastung des Bordnetzes signifikant einbricht und die elektrische Lenkung schwergängig wird, was den Fahrer insbesondere bei einem in der Regel schnell auszuführenden Wendemanöver verunsichert und eine deutliche Komforteinbuße bedeutet.

"Temporär" bedeutet vorzugsweise, dass die Zeitdauer so bemessen ist, dass die bevorstehende Fahrsituation unter Beteilung der entsprechenden elektrischen Verbraucher vom Fahrer sicher und ohne Komforteinbuße bewältigt werden kann.

Bei einer Ausführungsform der Erfindung ist vorgesehen, dass zur Erreichung des zweiten niedrigeren Niveaus der elektrischen Last des elektrischen Bordnetzes mindestens eine elektrische Heiz-Vorrichtung des Kraftfahrzeugs in seiner Leistungsaufnahme reduziert oder abgeschaltet wird. Hierbei handelt es sich bevorzugt um eine Sitzheizung und/oder eine Heckscheibenheizung und/oder eine Waschdüsenheizung und/oder eine Spiegelheizung und/oder Lenkradheizung und/oder Frontscheibenheizung. Heiz-Vorrichtungen sind in der Regel recht träge, so dass sich deren kurzzeitige Abschaltung oder Leistungsreduzierung kaum nachteilig für den Fahrer bemerkbar macht.

Bei einer Ausgestaltung der Erfindung wird zur Erreichung des zweiten niedrigeren Niveaus der elektrischen Last des elektrischen Bordnetzes mindestens ein elektrischer Komfortverbraucher in seiner Leistungsaufnahme reduziert oder abgeschaltet. Besonders "unauffällige" Komfortverbraucher bei kurzzeitiger Abschaltung oder Leistungsreduzierung in diesem Sinne sind die genannten Heiz-Vorrichtungen.

Bei einer Ausführungsform der Erfindung ist vorgesehen, dass die Fahrsituations-Erfassungseinrichtung berücksichtigt, wer der aktuelle Fahrer ist und wie sein früheres Verhalten war. Der aktuelle Fahrer kann insbesondere anhand des von ihm verwendeten Fahrzeugschlüssels erkannt werden. Hierdurch kann die Trefferquote für die Voraussage, dass ein Wendevorgang bevorsteht erhöht werden. Erkennt die Fahrsituations-Erfassungseinrichtung beispielsweise, dass der betreffende Fahrer stets einen Schlenker vor einem Wendevorgang fährt, was nicht von allen Fahrern getan wird, kann dieses Kriterium im erfindungsgemäßen Algorithmus zur Erkennung eines Wendevorgangs höher gewichtet werden.

Gemäß der Erfindung ist vorgesehen, dass der elektrische Verbraucher eine elektrisch betätigte Lenkung des Kraftfahrzeugs ist und die weitgehend unmittelbar bevorstehende besondere Fahrsituation ein Wendevorgang ist. Dies ist eine Fahrsituation bei der sich eine niedrige elektrische Spannung im Bordnetz besonders unangenehm für den Fahrer bemerkbar machen kann.

Bei einer Ausgestaltung der Erfindung ist vorgesehen, dass die Stellung des Fahr- bzw. Gaspedals von der Fahrsituations-Erfassungseinrichtung erfasst wird, und das Niveau der elektrischen Last des elektrischen Bordnetzes auf das zweite niedrigere Niveau gebracht wird, wenn sich das Fahrpedal bzw. Gaspedal weitgehend in seiner Ruhestellung befindet und mindestens eine weitere Fahrsituation eintritt. Auch dies ist charakteristisch für einen bevorstehenden Wendevorgang und liefert ein wichtiges Indiz für einen bevorstehenden Wendevorgang.

Bei einer Weiterbildung der Erfindung ist vorgesehen, dass die Beschleunigung und die Geschwindigkeit des Fahrzeugs von der Fahrsituations-Erfassungseinrichtung erfasst wird und das Niveau der elektrischen Last des elektrischen Bordnetzes auf das zweite niedrigere Niveau gebracht wird, wenn die Beschleunigung des Fahrzeugs negativ ist, die Geschwindigkeit einen vorbestimmten Schwellenwert unterschreitet und mindestens eine weitere Fahrsituation eintritt. Auch dies ist charakteristisch für einen bevorstehenden Wendevorgang und liefert ein wichtiges Indiz für einen bevorstehenden Wendevorgang.

Bei einer anderen Ausgestaltung der Erfindung wird der Lenkwinkel der elektrischen Lenkung des Fahrzeugs von der Fahrsituations-Erfassungseinrichtung erfasst. Das Niveau der elektrischen Last des elektrischen Bordnetzes wird auf das zweite niedrigere Niveau gebracht, wenn der Absolutwert des Lenkwinkels größer als ein vorbestimmter Schwellenwert ist und mindestens eine weitere Fahrsituation eintritt. Dies kann ein Indiz dafür sein, dass der Fahrer beginnt, einen Schlenker und/oder ein Wendemanöver zu fahren. Da ein Schlenker von zahlreichen Fahrern vor einem Wendevorgang gefahren wird, ist dies ggf. ein weiteres hilfreiches Kriterium, um einen bevorstehenden Wendevorgang ausreichend frühzeitig zu erkennen.

Bei einer weiteren Ausgestaltung der Erfindung ist vorgesehen, dass der Lenkwinkel der elektrischen Lenkung des Fahrzeugs von der Fahrsituations-Erfassungseinrichtung erfasst und das Niveau der elektrischen Last des elektrischen Bordnetzes auf das zweite niedrigere Niveau gebracht wird, wenn der Absolutwert des Lenkwinkels größer als eine vorbestimmte geschwindigkeitsabhängige Lenkschwelle bzw. Lenkwinkelschwelle ist und mindestens eine weitere Fahrsituation eintritt. Fährt der Fahrer keinen Schlenker vor einem Wendevorgang, kann dieses Charakteristikum eines bevorstehenden Wendevorgangs das "Schlenker-Kriterium" ersetzen und die Zuverlässigkeit der Voraussage eines bevorstehenden Wendevorgangs erhöhen.

Bei einer bevorzugten Ausführungsform der Erfindung ist vorgesehen, dass die Fahrsituations-Erfassungseinrichtung überprüft, ob das Fahrzeug einen Schlenker fährt. Das Fahren eines Schlenkers kann einen recht deutlichen Hinweis auf einen bevorstehenden Wendevorgang geben.

Bei einer Weiterbildung der Erfindung ist vorgesehen, dass die Fahrsituations-Erfassungseinrichtung überprüft, ob der Bremsdruck höher als ein vorbestimmter Bremsdruck bzw. ein Toleranzdruck ist und zudem überprüft, ob die Geschwindigkeit kleiner als ein vorbestimmter beschleunigungsabhängiger Geschwindigkeitswert bzw. eine dynamische Wende-Schwelle ist. Hierdurch lässt sich die Zuverlässigkeit der Prädiktion eines Wendevorgangs weiter steigern.

Das erfindungsgemäße Verfahren wird nachfolgend anhand von Ablaufplänen am Beispiel eines Wendevorgangs näher erläutert. Gleiche Bezugszeichen zeigen gleiche oder gleich wirkende Funktionen. Es zeigen:
- Fig. 1: die Hauptfunktion 1 bzw. den ersten Teil des erfindungsgemäßen Verfahrens;
- Fig. 2: die Hauptfunktion 2 bzw. den zweiten Teil des erfindungsgemäßen Verfahrens;
- Fig. 3: die Hauptfunktion 3 bzw. den dritten Teil des erfindungsgemäßen Verfahrens;
- Fig. 4: die Unterfunktion "Lenkschwelle" des erfindungsgemäßen Verfahrens; und
- Fig. 5: die Unterfunktion "Dynamische Wendeschwelle".

Der Ausgangspunkt für das nachfolgende Ausführungsbeispiel des erfindungsgemäßen Verfahrens ist der Folgende. Das Kraftfahrzeug ist mit einer elektrischen Lenkung ausgestattet. Die elektrische Lenkung benötigt bei der Durchführung eines Wendemanövers bzw. eines Wendevorgangs eine ausreichend hohe elektrische Spannung, die eventuell selbst von der Kombination aus Batterie und elektrischem Generator des Kraftfahrzeugs, die beide bereits weitgehend mit maximaler Leistung in das Bordnetz einspeisen, nicht aufgebracht werden kann. Dies kann insbesondere im Winter der Fall sein, wenn die elektrische Sitzheizung und/oder weitere Verbraucher mit hoher elektrischer Anschlussleistung eingeschaltet sind. Wird ein Wendemanöver in einer solchen Situation ohne Gegenmaßnahmen eingeleitet, bricht die Spannung im Bordnetz durch die zusätzliche Last der elektrischen Lenkung deutlich ein, weil die Lenkung ein hohes mechanisches Drehmoment beim Wendevorgang bereitstellen muss, und die Lenkung ist schwergängig. Dies ist für den Fahrer, insbesondere bei einem schnell auszuführenden Wendemanöver, sehr unangenehm. Durch das erfindungsgemäße Verfahren wird das unmittelbare Bevorstehen eines Wendemanövers sehr zuverlässig erkannt. Das elektrische Bordnetz wird durch das temporäre Abschalten elektrischer Verbraucher von kurz vor dem Wendemanöver bis kurz nach dem Wendemanöver entlastet.

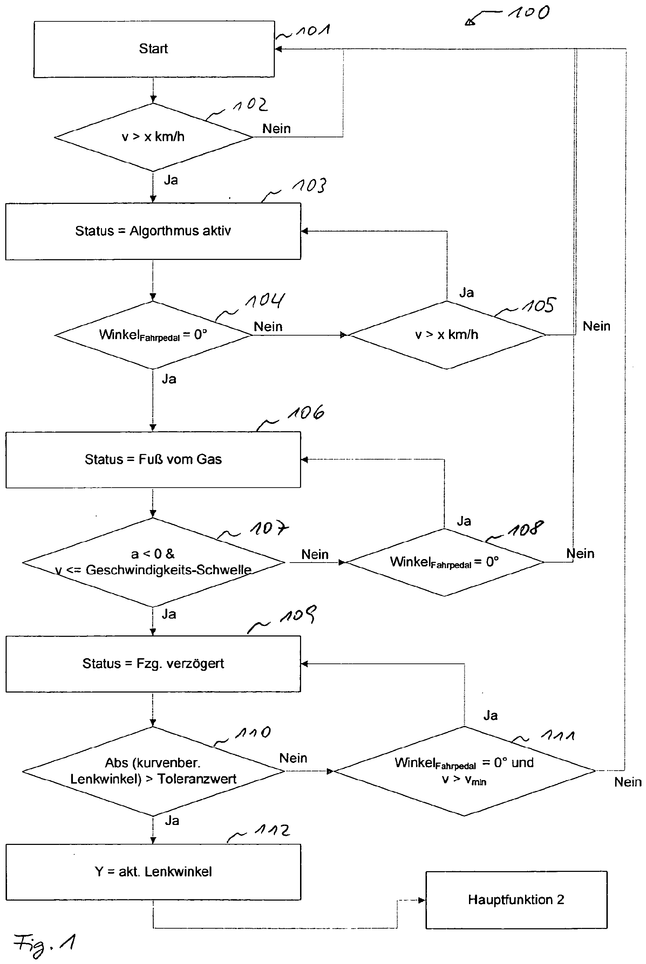

Figur 1 zeigt den ersten Teil 100 (Hauptfunktion 1) des erfindungsgemäßen Verfahrens zur Erkennung, ob das Kraftfahrzeug in Kürze ein Wendemanöver vornehmen wird. Im Schritt 101 beginnt das erfindungsgemäße Verfahren. Im Schritt 102 wird verglichen, ob das Fahrzeug eine vorbestimmte Geschwindigkeit x überschreitet. Falls nein, wird der Vergleich erneut ausgeführt. Falls ja, ist das erfindungsgemäße Verfahren zur Erkennung eines bevorstehenden Wendemanövers aktiv, wie im Status 103 dargestellt.

Im Schritt 104 wird verglichen, ob das Fahr- bzw. Gaspedal betätigt ist, d.h. ob der Winkel des Pedals 0 Grad (Ruhestellung) ist. Falls nein, wird im Schritt 105 überprüft, ob die Geschwindigkeit des Fahrzeugs größer als die vorbestimmte Geschwindigkeit x ist. Fall ja, wird der Schritt 104 erneut ausgeführt. Falls nein, beginnt das Verfahren erneut mit dem Schritt 101. Falls der Vergleich im Schritt 104 positiv verläuft, liegt der der Status "Fuß vom Gas" vor, wie im Status 106 angegeben.

Im Schritt 107 wird verglichen, ob die Beschleunigung des Fahrzeugs negativ ist (a<0) und ob die Geschwindigkeit kleiner als oder gleich einer vorbestimmten Geschwindigkeit ist (v<= Geschwindigkeitsschwelle). Falls nein, wird im Schritt 108 erneut die Stellung des Gaspedals erfasst. Ist das Gas- bzw. Fahrpedal nicht im Ruhezustand, beginnt das Verfahren ab dem Schritt 101. Ist das Gas- bzw. Fahrpedal nicht ausgelenkt bzw. betätigt, gilt dies als Status 106 und der Vergleich 107 läuft erneut ab. Ist das Ergebnis des Vergleichs 107 "ja", ist der Status des Fahrzeugs "Fahrzeug verzögert" (Status 109).

Unter dem nachfolgend verwendeten Begriff "kurvenbereinigter Lenkwinkel" ist folgendes zu verstehen. Bewegt sich das Fahrzeug auf einer geraden Strasse, so ist der Lenkwinkel bzw. die Stellung des Lenkrads 0 Grad, d.h. Geradeausfahrt. Fährt das Fahrzeug in einer Kurve, ist der Lenkwinkel verschieden von 0 Grad. Handelt es sich beispielsweise um eine gleichförmige Linkskurve, ist der Lenkwinkel für die Zeitdauer des Durchfahrens der gleichförmigen Linkskurve beispielsweise - 10 Grad. Um diese Form der Auslenkung des Lenkrads (kein bewusstes Lenken) von einem tatsächlichen Lenkvorgang (bewusster Lenkvorgang) auch im Fall einer Kurvenfahrt unterscheiden zu können, wird erfindungsgemäß ermittelt, wie groß der mittlere Lenkwinkel für einen zurückliegenden kurzen Zeitraum von beispielsweise 3 Sekunden war, und ermittelt, wie groß der Lenkwinkel aktuell ist. Dann wird die Differenz zwischen dem mittleren Lenkwinkel und dem aktuellen Lenkwinkel gebildet. Diese Differenz ist der kurvenbereinigte Lenkwinkel.

Im Schritt 110 wird verglichen, ob der Absolutwert des kurvenbereinigten Lenkwinkels größer als ein Toleranzwert ist, d.h. "Abs (kurvenbereinigter Lenkwinkel)>Toleranz-Wert". Ein Fahrer wird das Lenkrad beim Fahren stets etwas hin und her drehen ohne hierdurch lenken zu wollen.

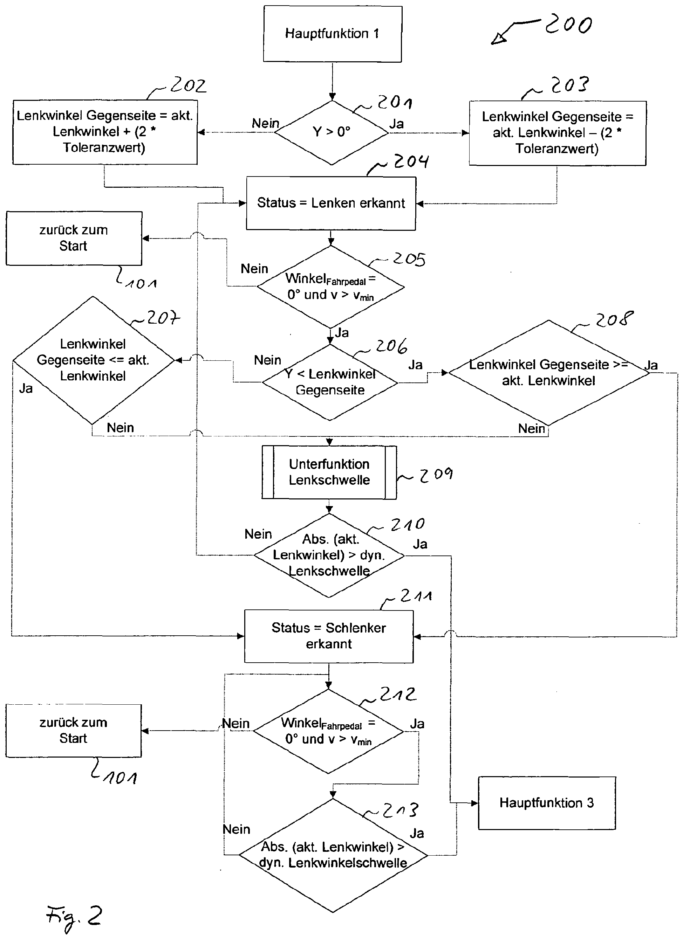

Falls nein, wird im Schritt 111 überprüft, ob das Gas- bzw. Fahrpedal nicht ausgelenkt und die Geschwindigkeit des Fahrzeugs größer als eine vorbestimmte Minimal-Geschwindigkeit ist. Falls ja, befindet sich das Fahrzeug im Status 109. Falls nein, beginnt das Verfahren erneut mit dem Status 101 "Start". Ist das Ergebnis des Schritts 110 "ja", wird der aktuelle Lenkwinkel y im Status 112 festgehalten und es wird davon ausgegangen, dass der erste Teil eines "Schlenkers" vom Fahrer herbeigeführt worden sein könnte. Nachfolgend geht es mit der in Figur 2 dargestellten Hauptfunktion 2 weiter.

Figur 2 zeigt den zweiten Teil 200 (Hauptfunktion 2) des erfindungsgemäßen Verfahrens. Im zweiten Teil 200 wird in den Schritten 201 bis 211 ermittelt, ob der Fahrer einen "Schlenker" fährt oder nicht, was ggf. ein weiteres Indiz für einen bevorstehenden Wendevorgang ist. Viele - aber nicht alle - Fahrer fahren vor einem Wendevörgang einen Schlenker.

Was unter dem Begriff "Schlenker" zu verstehen ist, soll zunächst für den Fall einer geraden Strasse erläutert werden. Folgt der Fahrer dem geraden Straßenverlauf bleibt das Lenkrad weitgehend in seiner Ruhestellung. Bei einer ersten Form des Schlenkers wird zunächst nach rechts deutlich über die Ruhestellung des Lenkrads hinaus und dann nach links deutlich über die Ruhestellung hinaus gelenkt. Hierbei gelangt der Fahrer bei Rechtsverkehr an den rechten Fahrbahnrand und die Front des Fahrzeugs zeigt bereits etwas mehr in die Gegenrichtung als bei der Geradeausfahrt. Bei einer zweiten Form eines Schlenkers lenkt der Fahrer zunächst nach links deutlich über die Ruhestellung des Lenkrads hinaus, dann nach rechts deutlich über die Ruhestellung hinaus.

Wird ein Schlenker gefahren, wenn sich das Fahrzeug beispielsweise auf einer Linkskurve bewegt, bewegt sich die Fahrbahn sozusagen unter dem Fahrzeug nach links - im Unterschied zu einer geraden Strasse. Während der normalen Kurvenfahrt ist das Lenkrad entsprechend der Krümmung der Kurve ggü. der 0-Lage verdreht, d.h. der Lenkwinkel ist bei einer Linkskurve kleiner als 0 Grad und bei einer Rechtskurve größer als 0 Grad.

Um auch bei einer Kurvenfahrt einen Schlenker erkennen zu können, wird im Schritt 201 überprüft, ob der Lenkwinkel y größer als 0 Grad ist. Falls nein, gilt Lenkwinkel Gegenseite = Lenkwinkel + ( 2 * Toleranzwert), d.h. der Status 202. Falls ja, gilt Lenkwinkel Gegenseite = Lenkwinkel - (2 * Toleranzwert), d.h. der Status 203. In beiden Fällen gilt der "Status = Lenken erkannt" 204.

Im Schritt 205 wird erneut überprüft, ob das Fahrpedal nicht ausgelenkt ist und ob die Geschwindigkeit größer als die vorbestimmte Minimal-Geschwindigkeit ist. Falls nein, beginnt das erfindungsgemäße Verfahren erneut mit "Start", d.h. mit Status 101.

Falls ja, wird im Schritt 206 überprüft, ob der aktuelle Lenkwinkel y kleiner als der "Lenkwinkel Gegenseite" (vgl. Status 202 und 203) ist. Falls nein, wird im Schritt 207 überprüft, ob der Lenkwinkel Gegenseite kleiner als oder gleich dem aktuellen Lenkwinkel ist. Falls ja, gilt dies als Schlenker, wie im Status 211 "Schlenker erkannt" angegeben.

Falls ja, wird im Schritt 208 überprüft, ob der "Lenkwinkel Gegenseite" größer als oder gleich dem aktuellen Lenkwinkel ist. Falls ja, gilt dies als Schlenker, wie im Status 211 angegeben. Ist das Ergebnis des Vergleichs im Schritt 207 oder 208 "Nein" wird die Unterfunktion "Lenkschwelle" 209 im Rahmen des erfindungsgemäßen Verfahrens durchschritten.

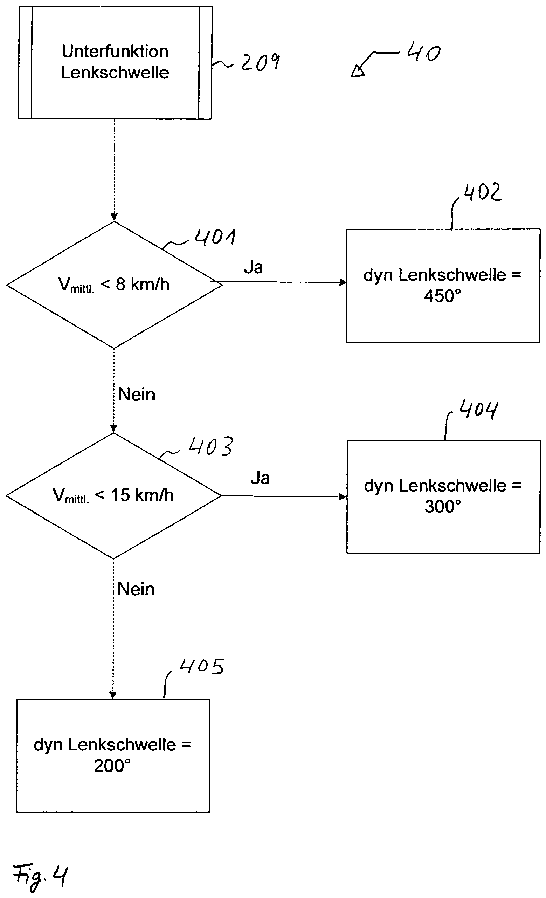

Figur 4 zeigt die Unterfunktion "Lenkschwelle" 400 des erfindungsgemäßen Verfahrens bei der eine geschwindigkeitsabhängige und damit dynamische Lenkschwelle für die weiteren Verfahrensschritte vorgegeben wird. Im Schritt 401 wird überprüft, ob die über einen bestimmten Zeitraum gemittelte Geschwindigkeit des Fahrzeugs kleiner als 8 km/h ist. Der Zeitraum kann beispielsweise zwischen 3 und 10 Sekunden betragen. Falls ja, wird die dynamische Lenkschwelle mit 450 Grad (Status 402) festgesetzt. Beim Geradeauslauf des Fahrzeugs, d.h. bei einem nicht aus dieser Position ausgelenkten Lenkrad beträgt der Winkel 0 bzw. 360 Grad. Falls nein, wird im Schritt 403 überprüft, ob die mittlere Geschwindigkeit des Fahrzeugs kleiner als 15 km/h ist, d.h. in Kombination mit dem Schritt 401, ob die mittlere Geschwindigkeit zwischen 8 km/h und 15 km/h liegt. Falls ja, wird die dynamische Lenkschwelle mit 300 Grad festgesetzt (Status 404). Falls nein, d.h. ist die Geschwindigkeit größer als 15 km/h, wird die dynamische Lenkschwelle mit 200 Grad festgesetzt.

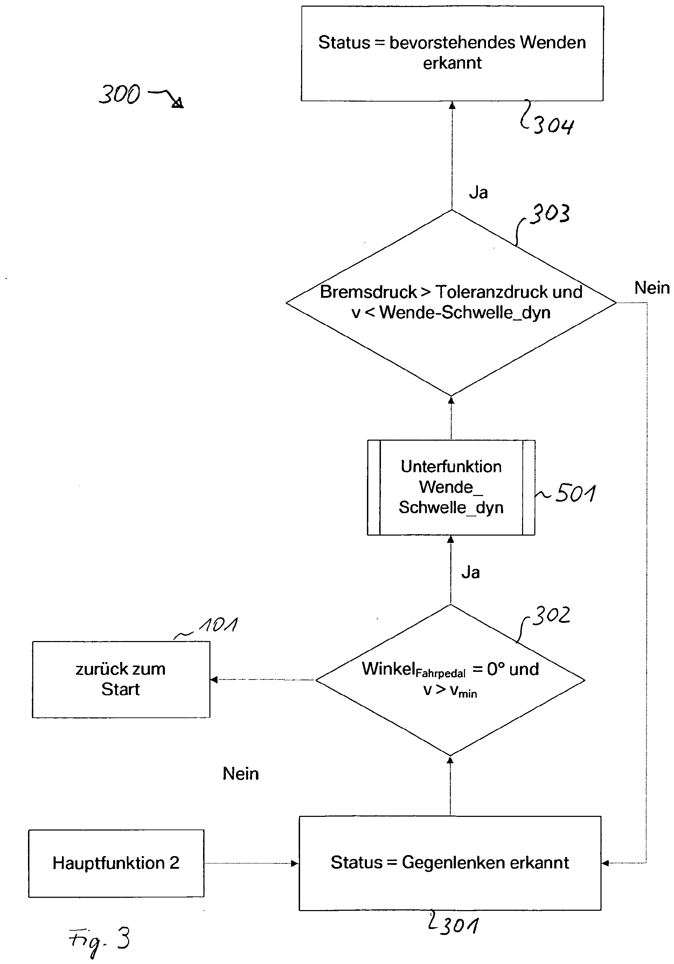

Im Schritt 210 wird überprüft, ob der Absolutwert des aktuellen Lenkwinkels größer als die dynamische Lenkschwelle für die aktuelle Fahrzeuggeschwindigkeit ist. Falls nein, beginnt das Verfahren erneut mit dem Status 204, d.h. "Lenken erkannt". Falls ja, wird das erfindungsgemäße Verfahren mit der Hauptfunktion 3 in Figur 3 fortgesetzt.

Gilt ein Schlenker als erkannt (Schritt 211) wird im Schritt 212 erneut überprüft, ob das Fahr- bzw. Gaspedal nicht betätigt ist (Winkel = 0 Grad) und ob die Geschwindigkeit größer als die vorbestimmte Minimal-Geschwindigkeit ist. Falls nein, beginnt das erfindungsgemäße Verfahren erneut mit "Start", d.h. ab dem Status 101. Falls ja, wird im Schritt 213 überprüft, ob der Absolutwert des aktuellen Lenkwinkels größer als die dynamische Lenkwinkelschwelle ist. Falls nein, wird der Vergleich im Schritt 212 wiederholt. Falls ja, liegt der Status "Gegenlenken erkannt "301 vor und das Verfahren wird mit der in Figur 3 dargestellten Hauptfunktion 3 fortgesetzt.

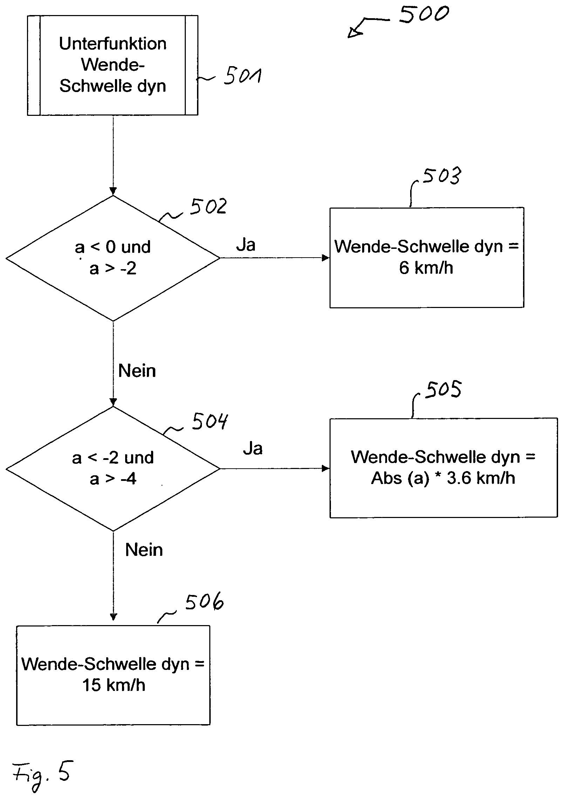

Im dritten Teil des erfindungsgemäßen Verfahrens, der in Figur 3 dargestellt ist, wird nun im Schritt 302 wiederum überprüft, ob das Gas- bzw. Fahrpedal nicht betätigt ist und ob die Geschwindigkeit des Fahrzeugs größer als die vorbestimmte Minimal-Geschwindigkeit ist. Falls nein, beginnt das Verfahren erneut mit "Start", d.h. ab Schritt 101. Falls ja, wird die in Figur 5 dargestellte Unterfunktion "Dynamische Wendeschwelle" 501 durchlaufen.

Bei der in Figur 5 dargestellten Unterfunktion "Dynamische Wendeschwelle" 501 wird im Schritt 502 überprüft, ob die über die letzten Sekunden gemittelte negative Beschleunigung des Fahrzeugs zwischen 0 m/s² und - 2 m/s² ist. Falls ja, wird die dynamische Wendeschwelle im Schritt 503 mit dem Wert 6 km/h festgelegt. Falls nein, wird im Schritt 504 überprüft, ob die negative Beschleunigung zwischen - 2 m/s² und - 4m/s² ist. Falls ja, wird die dynamische Wendeschwelle im Schritt 505 auf den Wert: Absolutwert der Beschleunigung mal Faktor 3,6 festgesetzt. Das Ergebnis ist ein Geschwindigkeitswert. Falls nein, wird die dynamische Wendeschwelle im Schritt 506 auf den Wert 15 km/h festgesetzt.

Nach dem Schritt 501 wird in dem in Figur 3 dargestellten Schritt 303 überprüft, ob der Bremsdruck höher als ein vorbestimmter Toleranz-Bremsdruck ist. Zudem wird überprüft, ob die aktuelle Geschwindigkeit des Fahrzeugs v kleiner als die bei der Unterfunktion "dynamische Wendeschwelle" festgesetzte dynamische Wendeschwelle ist. Falls nein, beginnt das erfindungsgemäße Verfahren erneut mit dem Schritt 301 in Figur 3.

Falls ja, gilt im Schritt 304 der "Status bevorstehendes Wenden erkannt". Mit dem Schritt 304 wird das Niveau der elektrischen Last des elektrischen Bordnetzes (unter Ausklammerung der elektrischen Lenkung) vom ersten höheren Niveau auf ein zweites ggü. dem ersten Niveau niedrigeres Niveau gebracht. Dies geschieht vor dem tatsächlichen Wendemanöver. Bevorzugt werden sämtliche Sitzheizungen des Fahrzeugs abgeschaltet. Beim Wendevorgang steht der elektrischen Lenkung des Kraftfahrzeugs dann eine ausreichend hohe elektrische Spannung und/oder elektrische Leistung zur Verfügung und eine ansonsten vorhandene für den Fahrer unangenehme Schwergängigkeit der Lenkung tritt aufgrund des erfindungsgemäßen Verfahrens nicht auf. Nachdem der Wendevorgang abgeschlossen oder voraussichtlich worden ist, werden die abgeschalteten Sitzheizungen wieder eingeschaltet. Die Beendigung des Wendevorgangs kann beispielsweise von der Fahrsituations-Erfassungseinrichtung überwacht und erkannt werden. Ein Kriterium kann beispielsweise sein, dass der Fahrer bereits wieder eine Zeit lang geradeaus fährt oder dass das Fahrzeug eine vorbestimmte Geschwindigkeit erreicht hat. Ebenso kann vorgesehen sein, dass der Wendevorgang nach einer vorbestimmten Zeit nach dem Schritt 304 als abgeschlossen gilt.

Es versteht sich, dass die Erfindung auch in einer verschlechterten Ausführungsform ausgeführt werden kann, bei der das Niveau der elektrischen Last des Bordnetzes bereits früher im Verlauf des erfindungsgemäßen Verfahrens reduziert wird. Ggf. steigt dann aber das Risiko eines "Fehlalarms", d.h. die Last-Reduzierung erfolgt dann mitunter ohne tatsächlichen späteren Bedarf.

## Patentansprüche

1. Verfahren zur Reduzierung des Energieverbrauchs eines Kraftfahrzeugs mit mindestens einem elektrischen Bordnetz an das mindestens ein erster elektrischer Verbraucher angeschlossen ist,
- wobei sich das Niveau der elektrischen Last des elektrischen Bordnetzes ohne den mindestens ersten Verbraucher in einem ersten Betriebszustand des Kraftfahrzeugs auf einem ersten höheren Niveau befindet,
- dass das Niveau der elektrischen Last des elektrischen Bordnetzes ohne den mindestens ersten Verbraucher in einem zweiten Betriebszustand des Kraftfahrzeugs temporär auf ein zweites ggü. dem ersten Niveau niedrigeres Niveau gebracht wird, **dadurch gekennzeichnet,**
- **dass** der erste elektrische Verbraucher eine elektrische Lenkung des Fahrzeugs ist,
- **dass** eine im Fahrzeug vorgesehene Fahrsituations-Erfassungseinrichtung ein Wendemanöver bzw. einen Wendevorgang aufgrund des bisherigen Verhaltens des Fahrers (102, 104, 105, 107, 108, 110, 111, 201, 205, 206, 210, 212, 213, 302, 303, 401, 403) beim Steuern des Fahrzeugs und/oder des Fahrzeugs im Voraus erkennt und veranlasst, dass das Niveau der elektrischen Last des elektrischen Bordnetzes temporär auf das zweite niedrigere Niveau gebracht wird, und
- **dass** die Fahrsituations-Erfassungseinrichtung berücksichtigt, wer der aktuelle Fahrer ist und wie sein früheres Verhalten war, wobei der aktuelle Fahrer insbesondere anhand des von ihm verwendeten Fahrzeugschlüssels erkannt wird.

2. Verfahren nach Anspruch 1, **dadurch gekennzeichnet, dass** zur Erreichung des zweiten niedrigeren Niveaus der elektrischen Last des elektrischen Bordnetzes mindestens eine elektrische Heiz-Vorrichtung des Kraftfahrzeugs in seiner Leistungsaufnahme reduziert oder abgeschaltet wird, wie insbesondere eine Sitzheizung, eine Heckscheibenheizung, eine Waschdüsenheizung, eine Spiegelheizung eine Lenkradheizung oder eine Frontscheibenheizung.

3. Verfahren nach Anspruch 1 oder 2, **dadurch gekennzeichnet, dass** zur Erreichung des zweiten niedrigeren Niveaus der elektrischen Last des elektrischen Bordnetzes mindestens ein elektrischer Komfortverbraucher in seiner Leistungsaufnahme reduziert oder abgeschaltet wird, wie insbesondere eine Sitzheizung, eine Heckscheibenheizung, eine Waschdüsenheizung oder eine Spiegelheizung.

4. Verfahren nach Anspruch 1, **dadurch gekennzeichnet, dass** die Stellung des Fahr- bzw. Gaspedals von der Fahrsituations-Erfassungseinrichtung erfasst wird, und das Niveau der elektrischen Last des elektrischen Bordnetzes auf das zweite niedrigere Niveau gebracht wird, wenn sich das Fahrpedal bzw. Gaspedal weitgehend in seiner Ruhestellung (104, 108, 111, 205, 212, 302) befindet und mindestens eine weitere Fahrsituation (107, 110, 111, 205, 210, 212, 213, 302, 303) eintritt.

5. Verfahren nach einem der vorstehenden Ansprüche, **dadurch gekennzeichnet, dass** die Beschleunigung und die Geschwindigkeit des Fahrzeugs von der Fahrsituations-Erfassungseinrichtung erfasst wird, und das Niveau der elektrischen Last des elektrischen Bordnetzes auf das zweite niedrigere Niveau gebracht wird, wenn die Beschleunigung des Fahrzeugs negativ ist, die Geschwindigkeit einen vorbestimmten Schwellenwert unterschreitet (107) und mindestens eine weitere Fahrsituation (110, 111, 205, 210, 212, 213, 302, 303) eintritt.

6. Verfahren nach einem der vorstehenden Ansprüche, **dadurch gekennzeichnet; dass** der Lenkwinkel der elektrischen Lenkung des Fahrzeugs von der Fahrsituations-Erfassungseinrichtung erfasst wird, und das Niveau der elektrischen Last des elektrischen Bordnetzes auf das zweite niedrigere Niveau gebracht wird, wenn der Absolutwert des Lenkwinkels größer als ein vorbestimmter Schwellenwert ist (110) und mindestens eine weitere Fahrsituation (107, 111, 205, 210, 212, 213, 302, 303) eintritt.

7. Verfahren nach einem der vorstehenden Ansprüche, **dadurch gekennzeichnet, dass** der Lenkwinkel der elektrischen Lenkung des Fahrzeugs von der Fahrsituations-Erfassungseinrichtung erfasst wird, das Niveau der elektrischen Last des elektrischen Bordnetzes auf das zweite niedrigere Niveau gebracht wird, wenn der Absolutwert des Lenkwinkels größer als eine vorbestimmte geschwindigkeitsabhängige Lenkschwelle bzw. Lenkwinkelschwelle ist (210, 213) und mindestens eine weitere Fahrsituation (102, 104, 105, 107, 108, 110, 111, 201, 205, 206, 212, 302, 303, 401, 403) eintritt.

8. Verfahren nach Anspruch 1, **dadurch gekennzeichnet, dass** die Fahrsituations-Erfassungseinrichtung überprüft, ob das Fahrzeug einen Schlenker (211) fährt.

9. Verfahren nach einem der vorstehenden Ansprüche, **dadurch gekennzeichnet, dass** die Fahrsituations-Erfassungseinrichtung überprüft, ob der Bremsdruck höher als ein vorbestimmter Bremsdruck bzw. ein Toleranzdruck ist und zudem überprüft, ob die Geschwindigkeit kleiner als ein vorbestimmter beschleunigungsabhängiger Geschwindigkeitswert bzw. eine dynamische Wende-Schwelle ist (303, 502, 503, 504, 505).

## Claims

1. A method for reducing the energy consumption of a motor vehicle having at least one electrical system, to which at least a first electrical consumer is connected,
- wherein the level of the electrical load of the electrical system without the at least first consumer is at a first relatively high level in a first operating mode of the motor vehicle,
- the level of the electrical load of the electrical system without the at least first consumer is temporarily brought to a second level, which is lower than the first level, in a second operating mode of the motor vehicle, **characterised in that**
- the first electrical consumer is an electric steering of the vehicle,
- a driving situation detection device, provided in the vehicle, detects in advance a turning manoeuvre or a turning procedure based on the driver's previous behaviour (102, 104, 105, 107, 108, 110, 111, 201, 205, 206, 210, 212, 213, 302, 303, 401, 403) in controlling the vehicle and/or on the previous behaviour of the vehicle and causes the level of the electrical load of the electrical system to be temporarily brought to the second lower level, and
- the driving situation detection device factors into consideration the identity of the current driver and the nature of the driver's previous behaviour, the current driver being recognised more especially based on the vehicle key used by the driver.

2. A method according to claim 1, **characterised in that** in order to reach the second lower level of the electrical load of the electrical system, at least one electrical heating device of the motor vehicle, such as more especially a seat heater, a rear window heater, a washing jet heater, a mirror heater, a steering wheel heater or a front windscreen heater, is reduced in power consumption or is switched off.

3. A method according to claim 1 or claim 2, **characterised in that** in order to reach the second lower level of the electrical load of the electrical system, at least one electrical comfort consumer, such as more especially a seat heater, a rear window heater, a washing jet heater or a mirror heater, is reduced in power consumption or is switched off.

4. A method according to claim 1, **characterised in that** the position of the accelerator pedal or throttle pedal is detected by the driving situation detection device, and the level of the electrical load of the electrical system is brought to the second lower level when the accelerator pedal or throttle pedal is substantially in its rest position (104, 108, 111, 205, 212, 302) and when at least one further driving situation occurs (107, 110, 111, 205, 210, 212,213,302,303).

5. A method according to any of the preceding claims, **characterised in that** the acceleration and the speed of the vehicle is detected by the driving situation detection device, and the level of the electrical load of the electrical system is brought to the second lower level when the acceleration of the vehicle is negative, when the speed falls below a predetermined threshold value (107) and when at least one further driving situation (110, 111, 205, 210, 212, 213, 302, 303) occurs.

6. A method according to any of the preceding claims, **characterised in that** the steering angle of the electrical steering of the vehicle is detected by the driving situation detection device, and the level of the electrical load of the electrical system is brought to the second lower level when the absolute value of the steering angle is greater than a predetermined threshold value (110) and when at least one further driving situation (107, 111, 205, 210, 212, 213, 302, 303) occurs.

7. A method according to any of the preceding claims, **characterised in that** the steering angle of the electrical steering of the vehicle is detected by the driving situation detection device, and the level of the electrical load of the electrical system is brought to the second lower level when the absolute value of the steering angle is greater than a predetermined speed-dependent steering threshold or steering angle threshold (210, 213) and when at least one further driving situation (102, 104, 105, 107, 108, 110, 111, 201, 205, 206, 212, 302, 303, 401, 403) occurs.

8. A method according to claim 1, **characterised in that** the driving situation detection device checks whether the vehicle is performing a swerve manoeuvre (211).

9. A method according to any of the preceding claims, **characterised in that** the driving situation detection device checks whether the brake pressure is higher than a predetermined brake pressure and a tolerance pressure and also checks whether the speed is lower than a predetermined acceleration-dependent speed value and a dynamic turning threshold (303, 502, 503, 504, 505).

## Revendications

1. Procédé de réduction de la consommation d'énergie d'un véhicule automobile comportant au moins un réseau de bord, électrique, auquel est raccordé au moins un premier consommateur électrique,
- selon lequel le niveau de la charge électrique du réseau de bord sans au moins le premier consommateur se trouve dans un premier état de fonctionnement du véhicule à un premier niveau élevé,
- le niveau de la charge électrique du réseau de bord électrique sans au moins le premier consommateur se trouve dans un second état de fonctionnement du véhicule automobile, temporairement à un second niveau plus bas que le premier niveau,
procédé **caractérisé en ce que**
- le premier consommateur électrique est la direction électrique du véhicule,
- une installation de saisie de la situation de conduite équipant le véhicule reconnait par avance une manoeuvre de changement de direction ou une opération de changement de direction à partir du comportement jusqu'alors du conducteur (102, 104, 105, 107, 108, 110, 111, 201, 205, 206, 210, 212, 213, 302, 303, 401, 403) pour la commande du véhicule et/ou du véhicule, et fait que le niveau de la charge électrique du réseau de bord électrique soit mis temporairement au second niveau plus bas, et
- l'installation de saisie de la situation de conduite tient compte de qui est le conducteur actuel et comment était son comportement passé, le conducteur actuel étant reconnu notamment par sa clef du véhicule.

2. Procédé selon la revendication 1,
**caractérisé en ce que**
pour arriver au second niveau plus bas de la charge électrique du réseau de bord électrique, on réduit ou on coupe au moins un dispositif de chauffage électrique du véhicule pour sa puissance consommée, notamment un chauffage de siège, le chauffage de la lunette arrière, le chauffage de la buse d'eau de lavage, le chauffage de rétroviseur, le chauffage du volant de direction ou le chauffage du pare-brise.

3. Procédé selon la revendication 1 ou 2,
**caractérisé en ce que**
pour atteindre le second niveau plus bas de la charge électrique du réseau de bord électrique on réduit ou on coupe la prise de puissance d'au moins un consommateur électrique de confort, notamment un chauffage de siège, le chauffage de la lunette arrière, le chauffage de la buse d'eau de lavage ou le chauffage de rétroviseur.

4. Procédé selon la revendication 1,
**caractérisé en ce qu'**
on saisit la position de la pédale d'accélérateur par l'installation de saisie de la situation de conduite et on met le niveau de la charge électrique du réseau de bord électrique au second niveau plus bas si la pédale d'accélérateur est dans une large mesure en position de repos (104, 108, 111, 205, 212, 302) et s'il se produit au moins une autre situation de conduite (107, 110, 111, 205, 210, 212, 213, 302, 303).

5. Procédé selon l'une des revendications précédentes,
**caractérisé en ce qu'**
on saisit l'accélération et la vitesse du véhicule avec l'installation de saisie de la situation de conduite et on met le niveau de la charge électrique du réseau de bord électrique au second niveau plus bas si l'accélération du véhicule est négative, si la vitesse passe en dessous d'un seuil prédéfini (107) et si l'on a au moins une autre situation de conduite (110, 111, 205, 210, 212, 213, 302, 303).

6. Procédé selon l'une des revendications précédentes,
**caractérisé en ce qu'**
on saisit l'angle de braquage de la direction électrique du véhicule avec l'installation de saisie de la situation de conduite et on met le niveau de la charge électrique du réseau de bord électrique au second niveau plus bas si la valeur absolue de l'angle de braquage est supérieure à un seuil prédéfini (110) et s'il se produit au moins une autre situation de conduite (107, 111, 205, 210, 212, 213, 302, 303).

7. Procédé selon l'une des revendications précédentes,
**caractérisé en ce que**
l'on saisit l'angle de braquage de la direction électrique du véhicule par l'installation de saisie de la situation de conduite, on met le niveau de la charge électrique du réseau de bord électrique au second niveau plus bas si la valeur absolue de l'angle de braquage est supérieure à un seuil de direction ou seuil d'angle de direction (210, 213) dépendant d'une vitesse prédéfinie et s'il se produit au moins une autre situation de conduite (102, 104, 105, 107, 108, 110, 111, 201, 205, 206, 212, 302, 303, 401, 403).

8. Procédé selon la revendication 1,
**caractérisé en ce que**
l'installation de saisie de la situation de conduite vérifie si le véhicule effectue un mouvement oscillant (211).

9. Procédé selon l'une des revendications précédentes,
**caractérisé en ce que**
l'installation de saisie de la situation de conduite vérifie si la pression des freins est supérieure à une pression de frein prédéterminée ou une pression de tolérance et de plus elle vérifie si la vitesse est inférieure à une vitesse prédéfinie dépendant de l'accélération ou à un seuil de retournement dynamique (303, 502, 503, 504, 505).
